Europäisches Patentamt

**European Patent Office**

**Office européen des brevets**

(11) Veröffentlichungsnummer: **0 092 838**
**B1**

(12) **EUROPÄISCHE PATENTSCHRIFT**

(45) Veröffentlichungstag der Patentschrift:
**22.04.87**

(21) Anmeldenummer: **83104054.8**

(22) Anmeldetag: **26.04.83**

(51) Int. Cl.⁴: **F 24 H  1/40,** F 24 H  1/18,
F 24 H  1/14, F 24 H  1/44

(54) **Gaswassererhitzer.**

(30) Priorität: **28.04.82  DE 3215779**

(43) Veröffentlichungstag der Anmeldung:
**02.11.83 Patentblatt 83/44**

(45) Bekanntmachung des Hinweises auf die Patenterteilung:
**22.04.87 Patentblatt 87/17**

(84) Benannte Vertragsstaaten:
**AT BE CH DE FR GB IT LI LU NL SE**

(56) Entgegenhaltungen:
**EP - A - 0 042 215**
**CH - A - 125 802**
**CH - A - 543 043**
**DD - A - 118 320**
**DE - A - 3 121 220**

**Patent Abstracts of Japan Band 6, Nr. 65, 24 April 1982**
**Patent Abstracts of Japan Band 6, Nr. 134, 21. July 1982**

(73) Patentinhaber: **Ruhrgas Aktiengesellschaft,**
**Huttropstrasse 60 Postfach 10 32 52,**
**D-4300 Essen 1 (DE)**

(72) Erfinder: **Jannemann, Theo, Nonnenkamp 11,**
**D-4270 Dorsten (DE)**
Erfinder: **Brünje, Horst, Ehlingstrasse 92,**
**D-4350 Recklinghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Beschreibung

Die Erfindung betrifft einen Gaswassererhitzer mit einem Gasbrenner und mindestens einem in dessen Abgasführung angeordneten, vom Heizungswasser durchströmten Wärmetauscher, wobei die Abgasführung zwei horizontal nebeneinander oberhalb des Gasbrenners liegende vom Abgas in entgegengesetzten Richtungen durchströmte Kammern bildet, deren Trennwand den Wärmetauscher in zwei den Kammern zugeordnete Abschnitte unterteilt.

Ein Gaswassererhitzer der eingangs genannten Art ist aus «Patent Abstracts of Japan», Band 6, Nr. 65, 24. April 1982 bekannt. Der Wärmeaustausch eines derartigen Gaswassererhitzers ist verbesserungsbedürftig. Ausserdem ist die Konstruktion platzaufwendig.

Der Erfindung liegt daher die Aufgabe zugrunde, bei einem Gaswassererhitzer der eingangs genannten Art den Wärmeaustausch zu verbessern und dadurch den Wirkungsgrad anzuheben, und zwar unter Erzielung einer sehr kompakten Bauweise.

Zur Lösung dieser Aufgabe ist der Gaswassererhitzer nach der Erfindung dadurch gekennzeichnet, dass die dem überstöchiometrisch vormischenden Gasbrenner zugeordnete Kammer als gegen Fremdluftzutritt geschlossene Brennkammer ausgebildet ist, wobei der Gasbrenner eine im Abstand von weniger als 50 mm, vorzugsweise weniger als 30 mm, zum Wärmetauscher angeordnete Brennerplatte aufweist; dass sich an die andere Kammer ein vom Abgas von oben nach unten umströmter Kondensations-Wärmetauscher anschliesst, bestehend aus mindestens einem vertikalen oder annähernd vertikalen Rohr mit achsparallelen Rippen; und dass dem Gasbrenner eine ein Gebläse enthaltende Vormischeinrichtung zugeordnet ist, die sich im wesentlichen parallel zum Kondensations-Wärmetauscher erstreckt.

Die Gesamtanordnung (Brenner dicht am Wärmetauscher, Vormischeinrichtung parallel zum rohrförmigen Kondensations-Wärmetauscher) ist so getroffen, dass sich eine optimale Baugrösse ergibt und ausserdem die Voraussetzungen für ein Aussenwandgerät geschaffen werden.

Auf der Brennerplatte bildet sich ein Flammenteppich hoher Wärmestromdichte aus, der sehr nahe am Wärmetauscher liegt und optimale Wärmeübertragungsverhältnisse gewährleistet. Die Energieausnutzung ist hoch, und zwar auch im Teillastbereich. Als weiterer Vorteil kommt hinzu, dass die Abgase schadstoffarm sind und einen hohen Taupunkt besitzen. Letzteres wirkt sich günstig aus im Zusammenhang mit dem erfindungsgemäss nachgeschalteten Kondensations-Wärmetauscher. Dort kann sich das Kondensat auf den grossflächigen Rippen niederschlagen und nach unten ablaufen. Das Kondensat bildet eine filmartige laminare Strömung, die im Gegensatz zu einer Tröpfchenbildung gute Wärmeübergangsverhältnisse sicherstellt und nicht zu einer Querschnittsverengung führt. Ausserdem wirken sich korrosionsbedingte Ablagerungen kaum querschnittsverengend aus.

Vorzugsweise macht der der Brennerplatte zugeordnete Abschnitt des Wärmetauschers $^2/_3$ von dessen Fläche aus. Der Wärmeaustausch ist dann besonders effektiv.

Vorteilhafterweise ist die Brennerplatte mit vier bis zwölf, vorzugsweise neun oder zehn Gemischdurchtrittsöffnungen pro cm$^2$ versehen und trägt auf einer Seite eine Kühlschlange.

Besonders gute Verhältnisse ergeben sich daraus, dass die Gemischdurchtrittsöffnungen der Brennerplatte einen Durchmesser von etwa 1–2,5 mm, vorzugsweise 1,8 mm, aufweisen, der sich zur Flammenseite hin um 50% erweitert.

Vorzugsweise ist die Kühlschlange der Brennerplatte an dem Heizungswasser-Auslass des Wärmetauschers angeschlossen, um die der Brennerplatte entzogene Wärme nutzen zu können.

Nach einem weiteren erfindungsgemässen Merkmal ist der Gaswassererhitzer dadurch gekennzeichnet, dass die Brennerplatte aus einem gut wärmeleitenden Material, insbesondere aus Kupfer oder aus einer Aluminiumlegierung besteht. Die Dicke der Brennerplatte ist abhängig von der Verlegung der Kühlschlange. Die hohe Wärmeleitfähigkeit des Materials sorgt dafür, dass Wärme günstig aus der Brennerplatte abgeführt und auf die Kühlschlange übertragen werden kann. Alternativ bietet sich erfindungsgemäss die Möglichkeit, dass die Brennerplatte aus Edelstahl ist und vorzugsweise eine Dicke von ca. 2 mm besitzt. Edelstahl hat den Vorteil der höheren Korrosions- und Temperaturbeständigkeit, wobei die geringe Wärmeleitfähigkeit dadurch kompensiert werden kann, dass die Kühlschlange enger auf der Brennerplatte verlegt werden kann.

Der Gaswassererhitzer nach der Erfindung ist ferner gekennzeichnet durch eine unmittelbar vor der Brennerplatte im Gemischweg angeordneten Querschnittsverengung zur Verhinderung von Brennerschwingungen.

Vorteilhafterweise bildet der Kondensations-Wärmetauscher den Heizungswasser-Einlass. Diese Anordnung stellt eine Annäherung an das Gegen- bzw. Kreuzstromprinzip dar und arbeitet mit entsprechend effektivem Wärmeaustausch.

Eine bevorzugte Ausführungsform ist dadurch gekennzeichnet, dass das Rohr des Kondensations-Wärmetauschers mit seinen Rippen ein sternförmiges Profil bildet. Derartige Profile sind als handelsübliche und dementsprechende preiswerte Massenartikel erhältlich.

Aus Korrosionsgründen ist es vorteilhaft, dass das Rohr des Kondensations-Wärmetauschers mit seinen Rippen aus einer gegen Abgas und Abgaskondensat korrosionsbeständigen Aluminiumlegierung besteht.

Vorzugsweise sind mehrere Rohre nebeneinander mit ihren Achsen in einer gemeinsamen Ebene angeordnet. Man erhält somit einen relativ flachen Kondensations-Wärmetauscher mit guten Strömungsverhältnissen für das Abgas.

Nach einem weiteren vorteilhaften Merkmal ist die Vorrichtung nach der Erfindung dadurch gekennzeichnet, dass der Abgas-Auslass des Kondensations-Wärmetauschers mit dem Einlass des Gebläses ein Koaxialrohr bildet. Dies ergibt eine sehr kompakte Bauweise, insbesondere wenn der Abgas-Auslass und der Gebläse-Einlass koaxial oder auf gleicher Höhe parallel zueinander horizontal durch eine Aussenwand oder in einen Luft-Abgas-Schornstein geführt werden.

Die Erfindung wird im folgenden anhand bevorzugter Ausführungsbeispiele im Zusammenhang mit der Zeichnung näher erläutert. Die Zeichnung zeigt in:

Fig. 1 einen Vertikalschnitt durch einen erfindungsgemässen Gaswassererhitzer in Aussenwandausführung;

Fig. 2 einen abgebrochenen Schnitt der Brennerplatte;

Fig. 3 einen Schnitt entlang der Linie V–V in Fig. 1

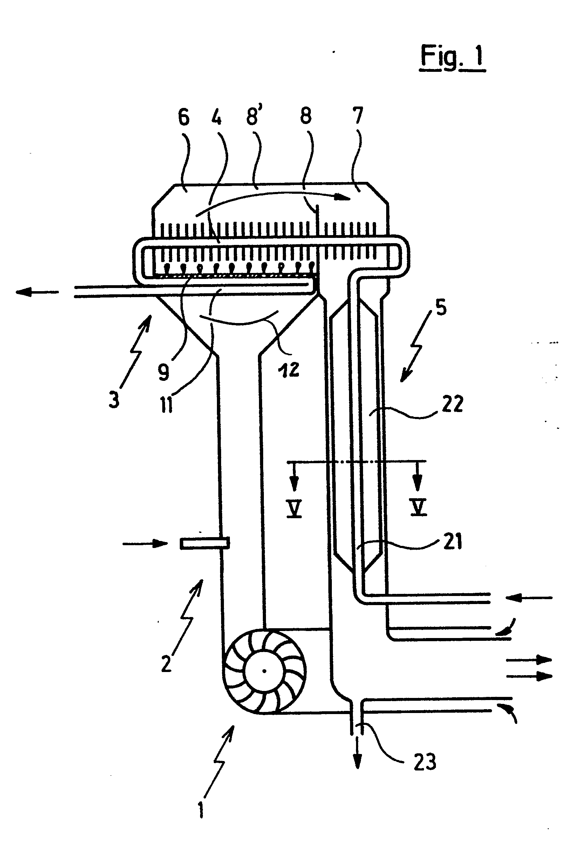

Nach Fig. 1 umfasst der erfindungsgemässe Gaswassererhitzer ein Gebläse 1, welches Verbrennungsluft mit niederigem Druck (ca. 1 bis 3 mbar) zu einer Vormischeinrichtung 2 fördert. Dort wird die Verbrennungsluft mit Gas gemischt, woraufhin das Gemisch nach oben zu einem Gasbrenner 3 gelangt. Letzterer beaufschlagt einen darüberliegenden, vom Heizungswasser durchströmten Wärmetauscher 4. An diesen schliesst sich ein vertikaler Kondensations-Wärmetauscher 5 an.

Im Bereich des Wärmetauschers 4 bildet die Abgasführung zwei nebeneinanderliegende, vom Abgas in entgegengesetzten Richtungen durchströmte Kammern 6 und 7, deren Trennwand 8 den Wärmetauscher in zwei den Kammern zugeordnete Abschnitte unterteilt und ausserhalb des Wärmetauscherbereichs eine Abgasumlenköffnung 8' definiert. Der Wärmetauscher 4 ist als Lamellen-Wärmetauscher ausgebildet und wird vom Heizungswasser von rechts nach links durchströmt. Die Unterteilung ist so getroffen, dass $^2/_3$ der Fläche des Wärmetauschers in der Kammer 6 liegen.

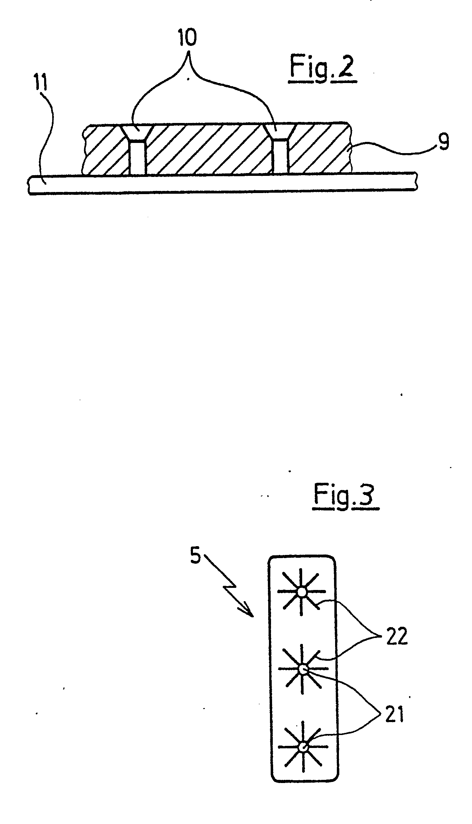

Die Kammer 6 bildet eine gegen Fremdluftzutritt geschlossene Brennkammer für den Gasbrenner 3. Letzterer arbeitet als überstöchiometrisch vormischender Brenner. Er weist eine Brennerplatte 9 auf, die gemäss Fig. 2 mit einer Vielzahl von Gemischdurchtrittsöffnungen 10, und zwar mit zehn pro cm², versehen ist. Der Durchmesser der Gemischdurchtrittsöffnungen 10 beträgt 1,8 mm und erweitert sich zur Flammenseite hin um 50%. Die Brennerplatte 9 besteht aus einer Aluminiumlegierung mit einer Dicke von 5 mm und trägt auf ihrer Rückseite eine Kühlschlange 11, die von dem aus dem Wärmetauscher 4 kommenden Heizungswasser durchströmt wird. Die Brennerplatte ist in einem Abstand von weniger als 30 mm zum Wärmetauscher 4 angeordnet. Direkt unterhalb der Brennerplatte befindet sich eine Querschnittsverengung in Form eines Bleches 12 zur Verhinderung von Brennerschwingungen.

Das aus dem Brenner austretende Abgas wird im Wärmetauscher 4 bis in die Nähe des Taupunktes und im anschliessenden Kondensations-Wärmetauscher 5 bis unter den Taupunkt, praktisch bis auf die Rücklauftemperatur des Heizungswassers abgekühlt.

Der Kondensations-Wärmetauscher 5 besteht gemäss Fig. 1 und 3 aus vertikalen Rohren 21, die achsparallele Rippen 22 tragen und mit diesen ein sternförmiges, im Handel erhältliches Profil aus einer korrosionsbeständigen Aluminiumlegierung bilden. Das Kondensat schlägt sich an den Rippen nieder und strömt als laminarer Film ohne Tröpfchenbildung an diesen nach unten. Es wird sodann durch einen Kondensatauslass 23 abgeführt. Gemäss Fig. 3 sind die Rohre 21 nebeneinander in einer gemeinsamen Ebene angeordnet, so dass der Kondensations-Wärmetauscher einen flachen Querschnitt mit günstigen Strömungsverhältnissen erhält.

**Patentansprüche**

1. Gaswassererhitzer mit einem Gasbrenner und mindestens einem in dessen Abgasführung angeordneten, vom Heizungswasser durchströmten Wärmetauscher, wobei die Abgasführung zwei horizontal nebeneinander oberhalb des Gasbrenners liegende, vom Abgas in entgegengesetzten Richtungen durchströmte Kammern bildet, deren Trennwand den Wärmetauscher in zwei den Kammern zugeordnete Abschnitte unterteilt, dadurch gekennzeichnet, dass die dem überstöchiometrisch vormischenden Gasbrenner (3) zugeordnete Kammer (6) als gegen Fremdluftzutritt geschlossene Brennerkammer ausgebildet ist, wobei der Gasbrenner eine im Abstand von weniger als 50 mm, vorzugsweise weniger als 30 mm, zum Wärmetauscher (4) angeordnete Brennerplatte (9) aufweist; dass sich an die andere Kammer (7) ein vom Abgas von oben nach unten umströmter Kondensations-Wärmetauscher (5) anschliesst, bestehend aus mindestens einem vertikalen oder annähernd vertikalen Rohr (21) mit achsparallelen Rippen (22); und dass dem Gasbrenner (3) eine ein Gebläse (1) enthaltende Vormischeinrichtung (2) zugeordnet ist, die sich im wesentlichen parallel zum Kondensations-Wärmetauscher (5) erstreckt.

2. Gaswassererhitzer nach Anspruch 1, dadurch gekennzeichnet, dass der der Brennerplatte (9) zugeordnete Abschnitt des Wärmetauschers (4) $^2/_3$ von dessen Flächen ausmacht.

3. Gaswassererhitzer nach Anspruch 1 oder 2, dadurch gekennzeichnet, dass die Brennerplatte (9) mit vier bis zwölf, vorzugsweise neun oder zehn Gemischdurchtrittsöffnungen (10) pro cm² versehen ist und auf einer Seite eine Kühlschlange (11) trägt.

4. Gaswassererhitzer nach Anspruch 3, dadurch gekennzeichnet, dass die Gemischdurchtrittsöffnungen (10) der Brennerplatte (9) einen Durchmesser von etwa 1–2,5 mm, vorzugsweise 1,8 mm, aufweisen, der sich zur Flammenseite hin um 50% erweitert.

5. Gaswassererhitzer nach Anspruch 3 oder 4, dadurch gekennzeichnet, dass die Kühlschlange (11) der Brennerplatte (9) an den Heizungswasser-Anschluss des Wärmetauschers (4) angeschlossen ist.

6. Gaswassererhitzer nach einem der Ansprüche 1 bis 5, dadurch gekennzeichnet, dass die Brennerplatte (9) aus einem gut wärmeleitenden Material, insbesondere aus Kupfer oder einer Aluminiumlegierung besteht.

7. Gaswassererhitzer nach einem der Ansprüche 1 bis 5, dadurch gekennzeichnet, dass die Brennerplatte (9) aus Edelstahl besteht und eine Dicke von ca. 2 mm besitzt.

8. Gaswassererhitzer nach einem der Ansprüche 1 bis 7, gekennzeichnet durch eine unmittelbar vor der Brennerplatte im Gemischweg angeordnete Querschnittsverengung (12).

9. Gaswassererhitzer nach einem der Ansprüche 1 bis 8, dadurch gekennzeichnet, dass der Kondensations-Wärmetauscher (5) den Heizungswasser-Einlass bildet.

10. Gaswassererhitzer nach einem der Ansprüche 1 bis 9, dadurch gekennzeichnet, dass das Rohr (21) des Kondensations-Wärmetauschers (5) mit seinen Rippen (22) ein sternförmiges Profil bildet.

11. Gaswassererhitzer nach einem der Ansprüche 1 oder 10, dadurch gekennzeichnet, dass das Rohr (21) des Kondensations-Wärmetauschers (5) mit seinen Rippen (22) aus einer gegen Abgas und Abgaskondensat korrosionsbeständigen Aluminiumlegierung besteht.

12. Gaswassererhitzer nach einem der Ansprüche 1 bis 11, dadurch gekennzeichnet, dass mehrere Rohre (21) nebeneinander mit ihren Achsen in einer gemeinsamen Ebene angeordnet sind.

13. Gaswassererhitzer nach einem der Ansprüche 1 bis 12, dadurch gekennzeichnet, dass der Abgas-Anschluss des Kondensations-Wärmetauschers (5) mit dem Einlass des Gebläses (1) der Vormischeinrichtung (2) ein Koaxialrohr bildet.

**Claims**

1. A gas-fired water heating apparatus comprising a gas burner and at least one heat exchanger carrying water to be heated arranged in the flue system downstream of said burner, said flue system forming two chambers situated above said gas burner in horizontally adjacent positions and being passed by flue gas from said burner in opposite directions, the wall between said chambers subdividing said heat exchanger into two parts each associated with one of said two chambers characterized in that chamber (6) associated with the premixed fuel-lean burner (3) is a roomsealed combustion chamber, said gas burner having a burner plate (9) situated at a distance of less than 50 mm and preferably less than 30 mm from heat exchanger (4) and in that a condensing heat exchanger (5) through which flue gas passes downward is situated downstream of the second chamber (7), said condensing heat exchanger comprising at least one vertical or substantially vertical tube (21) carrying fins (22) the center lines whereof are parallel and in that a device for mixing gas and air (2) comprising a fan (1) is associated with said gas burner, said device being substantially parallel with said condensing heat exchanger.

2. A gas-fired water heating apparatus according to claim 1 characterized in that the surface of the part of said heat exchanger (4) associated with said burner plate (9) is two thirds of the total surface of said heat exchanger (4).

3. A gas-fired water heating apparatus according to claim 1 or 2 characterized in that four to twelve and preferably nine or ten ports (10) are arranged on each square centimeter of the surface of said burner plate (9), a coil (11) being arranged on one side of said burner plate (9) for cooling said burner plate (9).

4. A gas-fired water heating apparatus according to claim 3 characterized in that the diameter of said ports (10) arranged in said burner plate (9) is approx. 1 to 2.5 mm and preferably 1.8 mm, said diameter increasing by 50% towards the flame side of said plate.

5. A gas-fired water heating apparatus according to claim 3 or 4 characterized in that said coil (11) for cooling said burner plate (9) is connected with the water tubing of said heat exchanger (4).

6. A gas-fired water heating apparatus according to any one of claims 1 through 5 characterized in that the material of said burner plate (9) is a material of relatively high thermal conductivity and, more particularly, copper or an aluminum alloy.

7. A gas-fired water heating apparatus according to any one of claims 1 through 5 characterized in that the material of said burner plate (9) is a special steel and in that the thickness of said burner plate (9) is approx. 2 mm.

8. A gas-fired water heating apparatus according to any one of claims 1 through 7 characterized in that the passage through which the gas/air mixture flows to said burner plate (9) comprises a restriction (12) immediately upstream of said burner plate (9).

9. A gas-fired water heating apparatus according to any one of claims 1 through 8 characterized in that said condensing heat exchanger (5) is the inlet of the hot water system.

10. A gas-fired water heating apparatus according to any one of claims 1 through 9 characterized in that the profile of said tube (21) of said condensing heat exchanger (5) and said fins (22) is starshaped.

11. A gas-fired water heating apparatus according to claim 1 or 10 characterized in that the material of said tube (21) of said condensing heat exchanger (5) and said fins (22) is an aluminum alloy resistant to corrosion attack by flue gas or flue gas condensate.

12. A gas-fired water heating apparatus according to any one of claims 1 through 11 characterized in that said condensing heat exchanger (5) comprises several adjacent tubes (21) having their center lines in one plane.

13. A gas-fired water heating apparatus according to any one of claims 1 through 12 characterized in that the flue gas system associated with said condensing heat exchanger (5) and the air intake system of said fan (1) of said device for mixing gas and air (2) are co-axial tubes.

**Revendications**

1. Générateur d'eau chaude fonctionnant au gaz, équipé d'un brûleur à gaz et d'au moins un échangeur de chaleur placé dans le système d'évacuation des fumées dudit brûleur et traversé par l'eau à chauffer, ledit système d'évacuation des fumées comprenant deux chambres, disposées horizontalement l'une à côté de l'autre au-dessus dudit brûleur et traversées par les fumées dans les deux sens opposés; leur cloison de séparation divisant ledit échangeur de chaleur en deux sections dont chacune est affectée à l'une desdites chambres; caractérisé par le fait que la chambre (6) affectée au brûleur à gaz à prémélange en excès d'air (3) est conçue comme une chambre de combustion étanche à l'air, ledit brûleur à gaz étant muni d'une plaque (9) disposée à une distance inférieure à 50 mm et de préférence inférieure à 30 mm par rapport audit échangeur de chaleur (4), que l'autre chambre (7) est suivie d'un échangeur de chaleur à condensations (5) traversé du haut en bas par les fumées et comprenant au moins un tube vertical ou pratiquement vertical (21) avec des nervures (22) parallèles à l'axe dudit tube et que ledit brûleur à gaz (3) est muni d'un dispositif de prémélange (2) avec un ventilateur (1), ledit dispositif de prémélange (2) étant essentiellement parallèle audit échangeur à condensations (5).

2. Générateur d'eau chaude fonctionnant au gaz selon la revendication 1, caractérisé par le fait que la surface de la section de l'échangeur de chaleur (4) affecté à la plaque (9) du brûleur représente les deux tiers de la surface totale dudit échangeur de chaleur.

3. Générateur d'eau chaude fonctionnant au gaz selon l'une quelconque des revendications 1 ou 2, caractérisé par le fait que la plaque (9) du brûleur est munie de quatre à douze, de préférence neuf ou dix, orifices (10) de formation des flammes par cm$^2$ et qu'elle est munie sur l'un des côtés d'un serpentin de refroidissement (11).

4. Générateur d'eau chaude fonctionnant au gaz selon la revendication 3, caractérisé par le fait que les orifices (10) de la plaque (9) du brûleur ont un diamètre d'environ 1 à 2,5 mm, de préférence 1,8 mm, s'élargissant d'environ 50% du côté des flammes.

5. Générateur d'eau chaude fonctionnant au gaz selon l'une quelconque des revendications 3 ou 4, caractérisé par le fait que le serpentin de refroidissement (11) de la plaque (9) du brûleur est raccordé au circuit d'eau à chauffer au niveau de l'échangeur de chaleur (4).

6. Générateur d'eau chaude fonctionnant au gaz selon l'une quelconque des revendications 1 à 5, caractérisé par le fait que la plaque (9) du brûleur est réalisée à partir d'un matériau bon conducteur de chaleur de préférence de cuivre ou d'un alliage d'aluminium.

7. Générateur d'eau chaude fonctionnant au gaz selon l'une quelconque des revendications 1 à 5, caractérisé par le fait que la plaque (9) du brûleur est en acier spécial d'une épaisseur d'environ 2 mm.

8. Générateur d'eau chaude fonctionnant au gaz selon l'une quelconque des revendications 1 à 7, caractérisé par une section rétrécie (12) disposée dans l'amenée du mélange immédiatement à l'amont de la plaque du brûleur.

9. Générateur d'eau chaude fonctionnant au gaz selon l'une quelconque des revendications 1 à 8, caractérisé par le fait que l'échangeur de chaleur à condensations (5) forme le départ de l'eau chauffé.

10. Générateur d'eau chaude fonctionnant au gaz selon l'une quelconque des revendications 1 à 9, caractérisé par le fait que le tube (21) de l'échangeur de chaleur à condensations (5) avec ses nervures (22) présente un profile étoilé.

11. Générateur d'eau chaude fonctionnant au gaz selon l'une quelconque des revendications 1 ou 10, caractérisé par le fait que le tube (21) de l'échangeur de chaleur à condensations (5) avec ses nervures (22) consiste d'un alliage d'aluminium resistant à corrosion par les fumées gazeuses ou les condensats.

12. Générateur d'eau chaude fonctionnant au gaz selon l'une quelconque des revendications 1 à 11, caractérisé par le fait que plusieurs tubes (21) sont disposés l'un à côté de l'autre et que leurs axes se situent tous sur un même plan.

13. Générateur d'eau chaude fonctionnant au gaz selon l'une quelconque des revendications 1 à 12, caractérisé par le fait que le système d'évacuation des fumées en aval de l'échangeur de chaleur à condensations (5) et l'amenée d'air du ventilateur (1) du dispositif de prémélange (2) sont coaxiaux.

Fig. 1

10

11

Fig.2

9

Fig.3

5

22

21